# EUROPÄISCHE PATENTSCHRIFT

(11) **EP 0 679 874 B1**
(45) Veröffentlichungstag und Bekanntmachung des Hinweises auf die Patenterteilung: **04.02.1998**
(21) Anmeldenummer: 95105535.9
(22) Anmeldetag: 12.04.1995
(51) Int. Cl.: G01F 1/66, B06B 1/06, G01H 11/08

(54) **Schallsensor**
Sound sensor
Capteur du son

(30) Priorität: 25.04.1994 DE 9406896 U; 10.03.1995 DE 19508721
(43) Veröffentlichungstag der Anmeldung: 02.11.1995
(73) Patentinhaber: SIEMENS AKTIENGESELLSCHAFT, 80333 München (DE)
(72) Erfinder: Stephan, Burkhard, Dr., D-91056 Erlangen (DE); Greppmaier, Paul, D-90475 Nürnberg (DE)

(56) Entgegenhaltungen:
- EP-A- 0 260 335
- EP-A- 0 401 643
- DE-A- 3 012 038
- DE-U- 8 704 183

## Beschreibung

Die Erfindung bezieht sich auf einen Schallsensor, insbesondere als Bestandteil eines Durchflußmessers für hohe Drücke (bis zu 40 bar) und hohe Temperaturen (bis zu 150 °C). Für derartige Schallsensoren wird eine hohe Standfestigkeit gegenüber Druckwechselbelastung gefordert. Sie kommen in eichfähigen Geräten mit einer Eichgültigkeitsdauer von mehr als 5 Jahren zum Einsatz.

Um die erforderliche Druckfestigkeit zu erhalten, ist eine dicke Metallmembran von Vorteil. Diese bringt jedoch eine hohe Signaldämpfung mit sich. Dünne Metallmembranen, die eine hohe Signalqualität gewährleisten, wurden bisher nur mit einem aufwendigen Stützverguß erreicht. Dieser ist mit einigen Nachteilen, wie hohen Kosten, geringer Alterungsbeständigkeit und begrenzter Temperaturbeständigkeit, verbunden.

Aus der EP 0 260 335 ist ein Schallsensor bekannt, bei dem ein Piezo-Kristall zur Anwendung kommt, der im Verhältnis zum Gehäuseboden eine große Dicke aufweist. Eine Beschädigung des Kristalls ist aufgrund der Dicke fast ausgeschlossen. Jedoch ist bei einer dicken Ausführung die Signalqualität relativ schlecht.

Der Erfindung liegt die Aufgabe zugrunde, einen Schallsensor, insbesondere als Bestandteil eines Durchflußmessers für hohe Drücke (bis zu 40 bar) und hohe Temperaturen (bis zu 150 °C) anzugeben, der standfest gegenüber Druckwechselbelastungen ist und mit einer dünnen Membran ausgeführt werden kann. Dies wird erfindungsgemäß mit einem Schallsensor gemäß den Merkmalen nach Anspruch 1 erreicht.

Dieser Schallsensor weist ein elektrisch leitendes Gehäuseteil auf. Ein Piezoschwinger liegt am Boden des Gehäuseteils und kontaktiert diesen großflächig. Auf der dem Boden gegenüberliegenden Seite ist der Piezoschwinger großflächig mit einer Kontaktfolie kontaktiert. Ein Andruckteil drückt aufgrund einer Anpreßkraft über die Kontaktfolie den Piezoschwinger auf den Boden. Das Andruckteil zur Druckübertragung auf den Piezoschwinger weist mehrere Vorsprünge mit Auflageflächen auf, die auf der Kontaktfolie gleichmäßig verteilt aufliegen. Auf diese Weise wird ein guter elektrischer Kontakt zwischen der Kontaktfolie und dem Piezoschwinger gewährleistet, ohne dabei das Schwingverhalten des Piezoschwingers in unzulässiger Weise zu beeinträchtigen. Der als Übertragungsmembran wirkende Boden kann relativ dünn ausgeführt werden.

Besonders vorteilhaft ist es, wenn drei Vorsprünge vorgesehen sind. Damit ist immer ein verwacklungssicherer Sitz gegeben, wodurch sich auch eine gute Kontaktierung ergibt. Ein Einstellen oder Justieren erübrigt sich. Dies erfolgt nämlich selbsttätig. Der Schallsensor eignet sich daher auch bestens für eine sogenannte Wurffertigung.

Die Andruckflächen sind bevorzugt punktförmig, so daß die Druckbelastung für den Piezoschwinger im Hinblick auf das Schwingverhalten günstig ist.

Eine hinsichtlich des Schwingverhaltens günstige Lösung ist gegeben, wenn das Andruckteil mittels einer Feder, insbesondere einer Tellerfeder, längs der Ultraschall-Abstrahlrichtung des Piezoschwingers schwingungsfähig gelagert ist.

Die elektrische Verbindung zum Piezoschwinger wird auf einfache Weise erreicht, wenn das Andruckteil metallisch ausgeführt ist und einen Anschlußpunkt zum Anschluß an eine elektrische Leitung aufweist. Diese Leitung führt dem Piezoschwinger von außen Energie zu und/oder dient zur Signalgewinnung.

Es ist günstig, wenn im Bereich zwischen den Vorsprüngen ein Dämpfungsglied unter einer vorgegebenen Preßspannung zwischen dem Andruckteil und dem Piezoschwinger eingefügt ist. Auf diese Weise ist eine einfache mechanische Bedämpfung des Sensors gegeben, wodurch in der Serienfertigung bei guten technischen Werten nur geringe Streuungen zwischen den einzelnen Sensoren gegeben sind.

Bevorzugt ist das Dämpfungsglied als Scheibe mit Öffnungen für die Vorsprünge ausgebildet. Damit ist eine klare Positionierung für das Dämpfungsglied gegeben, wodurch die Streuungen besonders gering gehalten werden.

Es ist günstig, wenn das Dämpfungsglied aus einem Elastomer-Material, insbesondere ein Flour-Elastomer, mit einer hohen Temperaturbeständigkeit, speziell bis ca. 150 bis 300°C, gefertigt ist. Damit ist ein konstantes Schwingungsverhalten bei großen Temperaturschwankungen gegeben.

Die für den Schallsensor erforderliche Druckfestigkeit wird mit wenig Aufwand erreicht, wenn eine Ansatzschraube mit einem Gewinde vorgesehen ist, womit der Abstand der Ansatzschraube zum Boden verstellbar ist, und wenn die Ansatzschraube über eine Isolierscheibe, die auf der Tellerfeder aufliegt, die Anpreßkraft an das Andruckteil weitergibt.

Ist die Ansatzschraube mit einer Kappe abgedeckt, die eine Öffnung mit einer Dichtlippe zur Durchführung der Leitung aufweist, so wird auf einfache Weise eine Abdichtung des Innenraums des Schallsensors erzielt.

Zur Positionierung und zum Andruck des Andruckteils an definierter Stelle auf der Kontaktfolie hat es sich bewährt, wenn der Piezoschwinger und das Andruckteil in dem Gehäuseteil zentriert liegen.

Der Piezoschwinger ist bevorzugt mit dem Boden elektrisch leitend verklebt. Damit ist von diesen Bauteilen eine Baueinheit gebildet, die erschütterungsfrei ist. Zusätzlich ist dabei die Kontaktierung gegenüber dem Stand der Technik verbessert. Auch die Kontaktfolie kann mit dem Piezoschwinger elektrisch leitend verklebt sein, wodurch sich ebenfalls die vorgenannten Vorteile ergeben.

Bevorzugt hat der Boden eine Dicke kleiner als 1 mm, speziell kleiner als 1 mm, insbesondere von 0,4 bis 0,8 mm. Auf diese Weise ist ein besonders günstiges Schwingungsverhalten gegeben, das eine genaue Schallerfassung erlaubt.

Ein Ausführungsbeispiel der Erfindung wird im folgenden anhand einer Zeichnung näher erläutert.

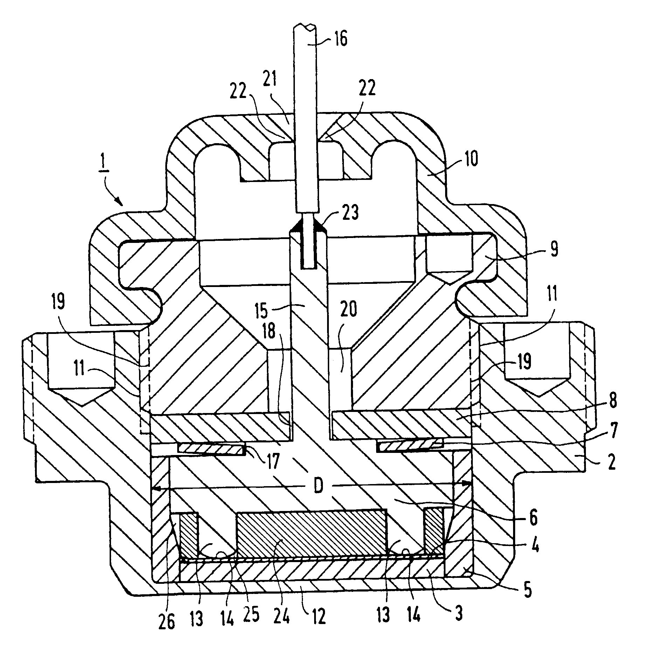

Gemäß der Zeichnung besteht der Schallsensor 1 im wesentlichen aus einem topfförmigen Gehäuseteil 2, einem zylindrischen Piezoschwinger 3, einer Kontaktfolie 4, einem Zentrierteil 5, einem Andruckteil 6, einer Tellerfeder 7, einer Isolierscheibe 8, einer Ansatzschraube 9 und einer Kappe 10.

Das topfförmige Gehäuseteil 2 ist ein elektrisch leitendes, hier vorzugsweise metallisches Drehteil mit einem Hohlraum, der z.B. durch eine Bohrung mit dem Durchmesser D gebildet ist. Die Wandung des Hohlraums ist oben mit einem Gewinde 11 versehen. Am Boden 12 des Gehäuseteils 2 ist der Piezoschwinger 3 elektrisch leitend verklebt. Der Piezoschwinger 3 ist durch das hülsenförmige, in seinen Außenabmessungen an den Durchmesser D angepaßte Zentrierteil 5 zentriert. Der Boden 12 wirkt hier als Metallmembran für den Piezoschwinger 3. Die Dicke des Bodens 12 ist entsprechend den Anforderungen an die Signalqualität leicht anpaßbar. Für hohe Signalqualität, wie im vorliegenden Fall, wird eine dünne Membran benötigt, wofür die Dicke des Bodens 12 kleiner als 1 mm, vorzugsweise 0,4-0,8 mm, ist. Die Dicke des Piezoschwingers 3 liegt im Bereich von nur wenigen Millimetern, vorzugsweise zwischen 0,5 bis 3 mm, speziell bei ca. 1 mm.

Die dem Boden 12 abgewandte Fläche des Piezoschwingers 3 ist vollkommen mit der Kontaktfolie 4 kontaktiert. Dies erfolgt beispielsweise durch eine elektrisch leitende Verklebung. Darüberliegend und ebenfalls durch das Zentrierteil 5 zentriert ist das zylindrisch geformte Andruckteil 6 angeordnet, das mehrere Vorsprünge 13 mit Andruckflächen 14 aufweist. In der vorliegenden Ausführung gemäß der Zeichnung sind es beispielhaft vier über die Kontaktfolie 4 gleichmäßig verteilte, vorzugsweise punktförmige Vorsprünge 13, über deren Andruckflächen 14 eine Anpreßkraft auf die Kontaktfolie 4 ausgeübt wird. Hierdurch wird ein guter elektrischer Kontakt gewährleistet, ohne das Schwingverhalten des Piezoschwingers 3 in unzulässigem Maße zu beeinflussen. Eine nicht näher gezeigte bevorzugte Ausführung weist ledigleich drei Vorsprünge 13 auf. Diese weist einen verwackelungssicheren Sitz auf.

Das Andruckteil 6 weist auf der den Vorsprüngen 13 gegenüberliegenden Seite, mittig liegend, einen stiftförmigen Fortsatz 15 auf, dessen Ende zum Anschluß einer elektrischen Leitung 16 dient. Auf derselben Seite ist das Andruckteil 6 mit einem zylinderförmigen Absatz 17 versehen, durch den die aufliegende Tellerfeder 7 zentriert ist. Dabei ist die Höhe des Absatzes 17 auf die Dicke der Tellerfeder 7 im zusammengepressten Zustand in der nachfolgend beschriebenen Weise angepaßt.

Auf der anderen Seite der Tellerfeder 7 liegt die mit einer mittigen Bohrung 18 versehene Isolierscheibe 8 auf. Im Anschluß daran ist die Ansatzschraube 9 angeordnet. Sie ist mit einem Außengewinde 19 versehen, das in das Gewinde 11 des Gehäuseteils 2 greift. Hierüber ist der Abstand der Ansatzschraube 9 zum Boden 12 hin stetig verstellbar, wobei im zusammenmontierten Zustand durch Anlage der Ansatzschraube 9 an der Isolierscheibe 8 und den sich daran anschließenden Teilen, d.h. der Tellerfeder 7 und dem Andruckteil 6, die Kraft der Tellerfeder 7 als Anpreßkraft gleichmäßig verteilt auf die Kontaktfolie 4 und den folgenden Piezoschwinger 3 übertragen wird.

Der zylinderförmige Absatz 17 muß demzufolge derart niedrig sein, daß eine ausreichende Anpreßkraft über die Tellerfeder 7 aufgebaut werden kann, bevor die Isolierscheibe 8 auf dem Absatz 17 aufliegt. Die auf diese Weise bewirkte mechanische Abstützung mit Federausgleich ermöglicht die Schwingfähigkeit des Piezoschwingers 3 in Verbindung mit dem Andruckteil 6.

Über das Andruckteil 6, die Isolierscheibe 8 und die Ansatzschraube 9 wird die erforderliche Druckfestigkeit des Schallsensors 1 hergestellt. Da der Schallsensor 1 nur aus wenigen Teilen besteht, die nicht justiert werden müssen, eignet er sich sehr gut für eine automatisierte Wurffertigung.

Bei eingeschraubter Ansatzschraube 9 ist der Hohlraum des topfförmigen Gehäuseteils 2 nur noch über eine Mittenbohrung 20 der Ansatzschraube 9 zugänglich. Der erwähnte stiftförmige Fortsatz 15 zum Anschluß der elektrischen Leitung 16 ist durch die Bohrung 18 der Isolierscheibe 8 und die Mittenbohrung 20 der Ansatzschraube 9 geführt. Anstelle des stiftförmigen Fortsatzes 15, der einstückig zum Andruckteil 6 gehört, kann auch ein getrennter Stift mit dem Andruckteil 6 verbunden sein. Wichtig ist in jedem Falle, daß vom Ende des Stiftes, der als elektrischer Anschlußpunkt 23 ausgebildet ist für die Leitung 16 eine elektrisch leitende Verbindung zum Piezoschwinger 3 besteht.

Die Ansatzschraube 9 ist durch die Kappe 10, z.B. aus Gummi, abgedeckt, in der zur dichten Durchführung der Leitung 16 eine Öffnung 21 mit Dichtlippe 22 angeordnet ist. Die beidseitig großflächige Kontaktierung des Piezoschwingers 3 durch den als Membran wirkenden Boden 12 und die Kontaktfolie 4 gewährleistet, daß dieser selbst bei Bruch funktionsfähig bleibt.
Optional kann im Bereich zwischen den Vorsprüngen 13 ein Dämpfungsglied 24 vorgesehen sein, das in zweckmäßiger Weise als Scheibe ausgebildet ist. Vorliegend erstreckt sich die Scheibe über die volle Größe des Piezoschwingers 3. Es sind daher Öffnungen 25 im Dämpfungsglied 24 angeordnet, so daß die durchgreifenden Vorsprünge 13 die Kontaktfolie 4 kontaktieren. Gegebenenfalls kann die Scheibe im Randbereich 26 auch derart geformt sein, daß der gesamte Raum zwischen dem Andruckteil 6 und dem Piezoschwinger 3 ausgefüllt ist und keine Hohlräume mehr bestehen.

Das Dämpfungsglied 24 ist bevorzugt aus einem temperaturbeständigen Material, z. B. einem Flour-Elastomer, gefertigt, bei dem bis ca. 300° C die Rückstellkräfte erhalten bleiben. Dadurch ist ein zuverlässiger Betrieb in Betriebsumgebungen mit erhöhten Temperaturen, z. B. bei Durchflußmessern für warme Medien, insbesondere heißes Wasser, gegeben. Das Dämpfungsglied 24 ist dabei in seiner Dicke derart bemessen, daß es unter einer Preßspannung eingefügt ist. Auf diese Weise ist eine einfache mechanische Bedämpfung des Piezoschwingers 3 gegeben. Bei einer Massenfertigung des Schallsensors 1 sind dadurch bei verbesserten technischen Werten fertigungsbedingte Störungen und Ausfälle bei den einzelnen Sensoren gegenüber dem Stand der Technik verringert.

## Patentansprüche

1. Schallsensor (1) mit folgenden Merkmalen:
a) Es ist ein elektrisch leitendes Gehäuseteil (2) mit einem Boden (12) vorgesehen,
b) ein Piezoschwinger (3) liegt am Boden (12) des Gehäuseteils (2) und kontaktiert diesen großflächig,
c) auf der dem Boden (12) gegenüberliegenden Seite ist der Piezoschwinger (3) großflächig mit einer Kontaktfolie (4) kontaktiert,
d) ein Andruckteil (6) drückt aufgrund einer Anpreßkraft über die Kontaktfolie (4) den Piezoschwinger (3) auf den Boden (12), gekennzeichnet dadurch, daß
e) das Andruckteil (6) mehrere Vorsprünge (13) mit Andruckflächen (14) aufweist, die auf der Kontaktfolie (4) gleichmäßig verteilt aufliegen.

2. Schallsensor nach Anspruch 1, wobei die Andruckflächen (14) punktförmig sind.

3. Schallsensor nach Anspruch 1 oder 2, wobei drei Vorsprünge (13) vorgesehen sind.

4. Schallsensor nach einem der vorangehenden Ansprüche, wobei zumindest im Bereich zwischen den Vorsprüngen (13) ein Dämpfungsglied (24) unter einer vorgegebenen Preßspannung zwischen dem Andruckteil (6) und dem Piezoschwinger (3) eingefügt ist.

5. Schallsensor nach Anspruch 4, wobei das Dämpfungsglied (24) als Scheibe mit Öffnungen (25) zur Aufnahme der Vorsprünge (13) ausgebildet ist.

6. Schallsensor nach einem der Ansprüche 4 bis 5, wobei das Dämpfungsglied (24) aus einem Elastomer-Material mit einer hohen Temperaturbeständigkeit, besteht.

7. Schallsensor nach Anspruch 6, wobei das Dämpfungsglied (24) eine Temperaturbeständigkeit bis ca. 150 bis 300°C aufweist.

8. Schallsensor nach einem der vorangehenden Ansprüche, wobei das Andruckteil (6) mittels einer Tellerfeder (7) längs der Ultraschall-Abstrahlrichtung des Piezoschwingers (3) schwingungsfähig gelagert ist.

9. Schallsensor nach einem der vorangehenden Ansprüche, wobei das Andruckteil (6) metallisch ausgeführt ist und einen Anschlußpunkt (23) zum Anschluß an eine elektrische Leitung (16) aufweist.

10. Schallsensor nach Anspruch 8 oder 9, wobei eine Ansatzschraube (9) mit einem Gewinde (11) vorgesehen ist, womit der Abstand der Ansatzschraube (9) zum Boden (12) verstellbar ist, und daß die Ansatzschraube (9) über eine Isolierscheibe (8), die auf der Tellerfeder (7) aufliegt, die Anpreßkraft an das Andruckteil (6) weitergibt.

11. Schallsensor nach Anspruch 10, wobei die Ansatzschraube (9) mit einer Kappe (10) abgedeckt ist, die eine Öffnung (21) mit einer Dichtlippe (22) zur Durchführung der Leitung (16) aufweist.

12. Schallsensor nach einem der vorangehenden Ansprüche, wobei der Piezoschwinger (3) und das Andruckteil (6) zentriert im Gehäuseteil (2) liegen.

13. Schallsensor nach einem der vorangehenden Ansprüche, wobei der Piezoschwinger (3) mit dem Boden (12) elektrisch leitend verklebt ist.

14. Schallsensor nach einem der vorangehenden Ansprüche, wobei die Kontaktfolie (4) mit dem Piezoschwinger (3) elektrisch leitend verklebt ist.

15. Schallsensor nach einem der vorangehenden Ansprüche, wobei der Boden (12) eine Dicke kleiner als 1 mm, bevorzugt kleiner als 1 mm, insbesondere von 0,4 bis 0,8 mm, aufweist.

## Claims

1. Sound sensor (1) having the following features:
a) an electroconductive housing part (2) with a base (12) is provided,
b) a piezoelectric oscillator (3) rests on the base (12) of the housing part (2) and makes contact with it over a large area,
c) on the side opposite the base (12) the piezoelectric oscillator (3) makes contact with a contact foil (4) over a large area,
d) a pressure part (6) presses the piezoelectric oscillator (3) on to the base (12) with a contact pressure via the contact foil (4), characterized in that
e) the pressure part (6) has several projections (13) with pressure surfaces (14) which rest in an evenly distributed manner on the contact foil (4).

2. Sound sensor according to claim 1, whereby the pressure surfaces (14) are punctiform.

3. Sound sensor according to claim 1 or 2, whereby three projections (13) are provided.

4. Sound sensor according to one of the preceding claims, whereby at least in the region between the projections (13) a damping element (24) is inserted between the pressure part (6) and the piezoelectric oscillator (3) under a specified clamping stress.

5. Sound sensor according to claim 4, whereby the damping element (24) is constructed as a disc with openings (25) to accommodate the projections (13).

6. Sound sensor according to one of claims 4 to 5, whereby the damping element (24) consists of an elastomer material with a high level of thermal stability.

7. Sound sensor according to claim 6, whereby the damping element (24) has a level of thermal stability of up to about 150 to 300°C.

8. Sound sensor according to one of the preceding claims, whereby the pressure part (6) is mounted by means of a cup spring (7) along the ultrasound radiation direction of the piezoelectric oscillator (3) in such a way that the pressure part (6) can oscillate.

9. Sound sensor according to one of the preceding claims, whereby the pressure part (6) is designed to be metallic and has a connecting point (23) for connection to an electrical line (16).

10. Sound sensor according to claim 8 or 9, whereby a shoulder screw (9) with a thread (11) is provided, whereby the spacing between the shoulder screw (9) and the base (12) can be adjusted, and in that the shoulder screw (9) relays the contact pressure to the pressure part (6) by way of an insulating disc (8) which rests on the cup spring (7).

11. Sound sensor according to claim 10, whereby the shoulder screw (9) is covered by a cap (10) which has an opening (21) with a sealing lip (22) to pass the line (16) through.

12. Sound sensor according to one of the preceding claims, whereby the piezoelectric oscillator (3) and the pressure part (6) lie centred in the housing part (2).

13. Sound sensor according to one of the preceding claims, whereby the piezoelectric oscillator (3) is fixed to the base (12) in an electroconductive manner.

14. Sound sensor according to one of the preceding claims, whereby the contact foil (4) is fixed to the piezoelectric oscillator (3) in an electroconductive manner.

15. Sound sensor according to one of the preceding claims, whereby the base (12) has a thickness of less than 1 mm, preferably less than 1 mm, in particular between 0.4 and 0.8 mm.

## Revendications

1. Capteur (1) acoustique comportant les caractéristiques suivantes :
a) il est prévu une pièce (2) de boîtier conductrice de l'électricité comportant un fond (12),
b) un générateur (3) piézo-électrique de vibration se trouve au fond (12) de la pièce (2) de boîtier et est en contact avec ce fond sur une grande surface,
c) du côté qui fait face au fond (12), le générateur (3) piézo-électrique de vibration est en contact sur une grande surface avec un ruban (4) de contact,
d) une pièce (6) d'application d'une pression presse en raison d'une force de pression transmise par l'intermédiaire du ruban (4) de contact le générateur (3) piézo-électrique de vibration sur le fond (12), caractérisé en ce que
e) la pièce (6) d'application d'une pression comporte plusieurs parties (13) en saillie comportant des surfaces (14) d'application de pression, qui reposent sur le ruban (4) de contact de manière répartie uniformément.

2. Capteur acoustique suivant la revendication 1, les surfaces (14) d'application d'une pression étant ponctuelles.

3. Capteur acoustique suivant la revendication 1 ou 2, trois parties (13) en saillie étant prévues.

4. Capteur acoustique suivant l'une des revendications précédentes, un élément (24) d'amortissement étant inséré au moins dans la zone comprise entre les parties (13) en saillie en étant soumis à une contrainte de pression prescrite entre la pièce (6) d'application d'une pression et le générateur (3) piézo-électrique de vibration.

5. Capteur acoustique suivant la revendication 4, l'élément (24) d'amortissement étant réalisé en disque comportant des ouvertures (25) servant à recevoir les parties (13) en saillie.

6. Capteur acoustique suivant l'une des revendications 4 à 5, l'élément (24) d'amortissement étant en un matériau d'élastomère ayant une grande résistance aux températures.

7. Capteur acoustique suivant la revendication 6, l'élément (24) d'amortissement ayant une résistance aux températures allant jusqu'à environ 150 à 300°C.

8. Capteur acoustique suivant l'une des revendications précédentes, la pièce (6) d'application d'une pression étant montée de manière à pouvoir vibrer le long de la direction d'émission d'ultrasons du générateur (3) piézo-électrique de vibration au moyen d'un ressort (7) Belleville.

9. Capteur acoustique suivant l'une des revendications précédentes, la pièce (6) d'application d'une pression étant réalisée en métal et comportant un point (23) de raccordement pour le raccordement à un conducteur (16) électrique.

10. Capteur acoustique suivant la revendication 8 ou 9, un boulon (9) à embase comportant un taraudage (11) étant prévu, la distance du boulon (9) à embase au fond (12) pouvant être réglée par ce taraudage, et le boulon (9) à embase retransmettant par l'intermédiaire d'un disque (8) isolant, qui repose sur le ressort (7) Belleville, la force de pression à la pièce (6) d'application d'une pression.

11. Capteur acoustique suivant la revendication 10, le boulon (9) à embase étant coiffé d'un capuchon (10) qui comporte une ouverture (21) comportant une lèvre (22) d'étanchéité pour la traversée du conducteur (16).

12. Capteur acoustique suivant l'une des revendications précédentes, le générateur (3) piézo-électrique de vibration et la pièce (6) d'application d'une pression étant centrés dans la pièce (2) de boîtier.

13. Capteur acoustique suivant l'une des revendications précédentes, le générateur (3) piézo-électrique de vibration étant collé de manière conductrice de l'électricité au fond (12).

14. Capteur acoustique suivant l'une des revendications précédentes, le ruban (4) de contact étant collé de manière conductrice de l'électricité au générateur (3) piézo-électrique de vibration.

15. Capteur acoustique suivant l'une des revendications précédentes, le fond (12) ayant une épaisseur inférieure à 1 mm, de préférence inférieure à 1 mm, notamment de 0,4 à 0,8 mm.
